# EUROPÄISCHE PATENTSCHRIFT

(11) **EP 0 682 286 B1**
(45) Veröffentlichungstag und Bekanntmachung des Hinweises auf die Patenterteilung: **01.08.2001**
(21) Anmeldenummer: 95106397.3
(22) Anmeldetag: 28.04.1995
(51) Int. Cl.: G03B 42/04

(54) **Datenkamera**
Camera for recording data
Caméra pour l'enregistrement de données

(30) Priorität: 11.05.1994 DE 4416736
(43) Veröffentlichungstag der Anmeldung: 15.11.1995
(73) Patentinhaber: Agfa-Gevaert AG, 51373 Leverkusen (DE)
(72) Erfinder: Bauer, Walter, D-81739 München (DE); Werner, Eberhard, Ing.-grad., D-86971 Peiting (DE)

(56) Entgegenhaltungen:
- FR-A- 2 464 503
- US-A- 3 628 864
- US-A- 5 311 567

## Beschreibung

Die Erfindung betrifft eine Datenkamera zum Belichten von Daten auf Röntgenfilm nach dem Oberbegriff des Anspruchs 1.

Röntgenfilme werden in der zerstörungsfreien Materialprüfung sowie in der medizinischen Röntgendiagnostik verwendet. Vielfach stellt sich hierbei die Aufgabe, zusätzlich zu dem aufgenommenen Röntgenbild aufnahmespezifische Daten aufzubelichten, wie Aufnahmetag, Name der Bedienungsperson, Filmtyp, Röhrenspannung, Objektbezeichnung usw. Für medizinische Anwendungszwecke werden neben den aufnahmespezifischen Daten auch Patientendaten auf dem Film benötigt, wie z. B. dessen Name, Geburtsdatum oder Krankenkasse. Die Patientendaten standen gemäß der DE 29 46 078 C2 früher auf bedruckten oder mit Schreibmaschine beschriebenen Datenkarten zur Verfügung, die für jeden Patienten angelegt wurden und über einen Belichtungsvorgang auf den Film abgebildet wurden. Da die Daten häufig aber auch in einen Zentralrechner eingegeben werden, bestand der Wunsch, diese digital vorhandenen Daten direkt auf den Film zu belichten. Das in der DE 29 46 078 C2 bereits vorgesehene LCD eignet sich hierzu nicht besonders gut, weil das Kontrastverhältnis verfügbarer LCDs bis heute noch zu wünschen übrig läßt. Auf dem Film sind diese Daten deswegen nicht gut lesbar.

Die Patientendaten werden heute vielfach über ein Terminal (Tastatur, PC) in den Zentralrechner eingegeben oder in diesen über einen Magnetkartenleser oder einen Barcodeleser von einer Patientendatenkarte, z. B. der sogenannten C2-Card, eingelesen. Von dem Zentralrechner aus lassen sich die digitalisierten Daten dann in einem Patientendatensystem zentral verwalten und an beliebige andere Geräte übermitteln.

Aus der WO 89/06377 ist ein System zum Belichten von Daten auf Röntgenfilm bekannt, mit dem die Patientendaten mittels Leuchtdioden (LEDs) direkt in einem Röntgenaufnahmegerät auf den Röntgenfilm belichtet werden können. Der Röntgenfilm befindet sich dabei - wie bei medizinischen Anwendungen üblich - in einer Röntgenfilmkassette, die ein Belichtungsfenster aufweist, durch das der Röntgenfilm mit den Patientendaten beaufschlagt wird. In einer Reihe angeordnete LEDs werden hierzu quer zu ihrer Anordnungsrichtung über das Belichtungsfenster der Röntgenfilmkassette bewegt. Um alphanumerische Daten auf den Film aufzubelichten, werden die einzelnen LEDs in zeitlicher Abfolge seriell oder parallel aktiviert. Ein Datenzeichen wird dabei aus mehreren, belichteten Datenpunkten zusammengesetzt.

Bei einer Kamera, wie sie in der WO 89/06377 beschrieben ist, hat sich gezeigt, daß bei vergleichbarem Kontrastumfang die Schärfe der abgebildeten Daten schlechter ist als bei den zuvor genannten, älteren Kameras.

Beim Aufbelichten von solchen Daten auf Röntgenfilm hat sich des weiteren gezeigt, daß es während dem Belichten der Röntgenfilme in einer Röntgenkassette leicht zum Verwackeln der Kassette, d. h. zu einem Verschieben der Kassette in der Kamera kommen kann. Die Kassetten werden zum Belichten manuell in die Datenkamera eingeführt. Bei derartigen manuellen Vorgängen besteht die Gefahr des Verwackelns. Dies ist umso mehr der Fall, da bei den oben genannten Belichtungsverfahren mittels LEDs relativ lange Belichtungszeiten auftreten können. Außerdem haben Röntgenkassetten häufig relativ große Formate, z. B. 40 x 40 cm oder 30 x 95 cm. Die Kassetten liegen deshalb während des Belichtens mit einem relativ großen Hebelarm in einer kurzen Führung der Datenkamera. Bereits geringe Bewegungen, z. B. am Kassettenende, können deshalb zum Verwackeln der Belichtungsaufnahme führen.

Aus der US-A 3,628,864 ist eine Datenkamera bekannt, mit der Daten, die auf eine Karte oder ein Blatt gedruckt sind, auf einen in einer Röntgenfilmkassette enthaltenen Röntgenfilm aufbelichtet werden können. Die Karte mit den Daten wird dabei von einer Lampe angeleuchtet, so daß das von der Karte reflektierte Licht durch ein Fenster der Kassette auf den Röntgenfilm fällt. Der in der Röntgenfilmkassette enthaltene Röntgenfilm wird mit den auf der Karte enthaltenen Daten flächenmäßig belichtet. Um ein Verwackeln der Kassette in der Datenkamera zu verhindern, wird in der US-A 3,628,864 u. a. beschrieben, daß die Röntgenkassette mittels zweier auf einer Grundplatte der bekannten Datenkamera eingebrachter Anschläge in eingeschobenem Zustand innerhalb der Datenkamera positioniert wird. Ein in der Datenkamera vorgesehener Stift fährt nach dem vollständigen Positionieren innerhalb der Datenkamera in ein in der Röntgenkassette eingebrachtes Loch. Dadurch soll die Röntgenkassette in der Datenkamera stabilisiert werden. In der US-A 3,628,864 wird ebenfalls beschrieben, daß die Röntgenkassette mittels eines Klemmittels in der Datenkamera positioniert und fixiert werden kann. Dieses Klemmittel ist an einem beweglichen Hebelarm drehbar befestigt. Durch ein Ziehen des Hebelarms in Richtung der in der Datenkamera eingeschobenen Kassette wird das Klemmittel an die Kassette angepreßt. Dadurch, daß das Klemmittel in dem Drehpunkt drehbar gelagert ist, kann es sich an die Kassette anlegen. Mit dem Klemmittel sind zwei stirnseitige Vorsprünge fest verbunden. Diese beiden Vorsprünge legen die Lage der Röntgenkassette in der Datenkamera fest. Die Lage der Röntgenkassette ist daher abhängig von der Position des Klemmittels. Mit dem Bewegen des Hebelarms und damit des Klemmittels verändert sich auch die Lage der Röntgenkassette innerhalb der Datenkamera. Diese Art der Positionierung und Fixierung der Röntgenkassette stellt daher eine äußerst komplizierte mechanische Einrichtung dar. Ein stabiles und exaktes Positionieren des in der Kassette vorhandenen Fensters zum Aufbelichten der Daten ist mit dieser Einrichtung nur sehr bedingt möglich. Zur flächenmäßigen Belichtung des Röntgenfilmes innerhalb der Datenkamera wird nach dem Einschieben der Röntgenkassette und ihrem Stabilisieren innerhalb der Datenkamera das in der Röntgenkassette vorhandene Fenster geöffnet. Anschließend werden die auf der Karte enthaltenen Daten mittels der Lampe auf den Röntgenfilm belichtet. Nachdem diese flächenmäßige Belichtung abgeschlossen ist, wird anschließend das Fenster wieder geschlossen.

Ausgehend von der Lehre der US-A 3,628,864 liegt der vorliegenden Erfindung die Aufgabe zugrunde, eine Datenkamera anzugeben, die eine gute Wiedergabequalität der Daten auf dem Röntgenfilm ermöglicht, die flexibel einsetzbar und einfach aufgebaut ist.

Diese Aufgabe wird gelöst durch die im Anspruch 1 beschriebene Datenkamera. Vorteilhafte Weiterbildungen der Erfindung ergeben sich aus den Unteransprüchen.

Im folgenden wird die Erfindung anhand einiger Ausführungsbeispiele und Figuren näher erläutert.

Es zeigen:
- Fig. 1: eine Datenkamera,
- Fig. 2: eine Darstellung der Datenkamera der Fig. 1 bei abgenommenem Gehäusedeckel,
- Fig. 3: die Datenkamera der Fig. 2 in Draufsicht,
- Fig. 4: einen Schnitt durch ein anderes Ausführungsbeispiel der Datenkamera und
- Fig. 5: die Datenkamera der Fig. 4 in einem anderen Betriebszustand.

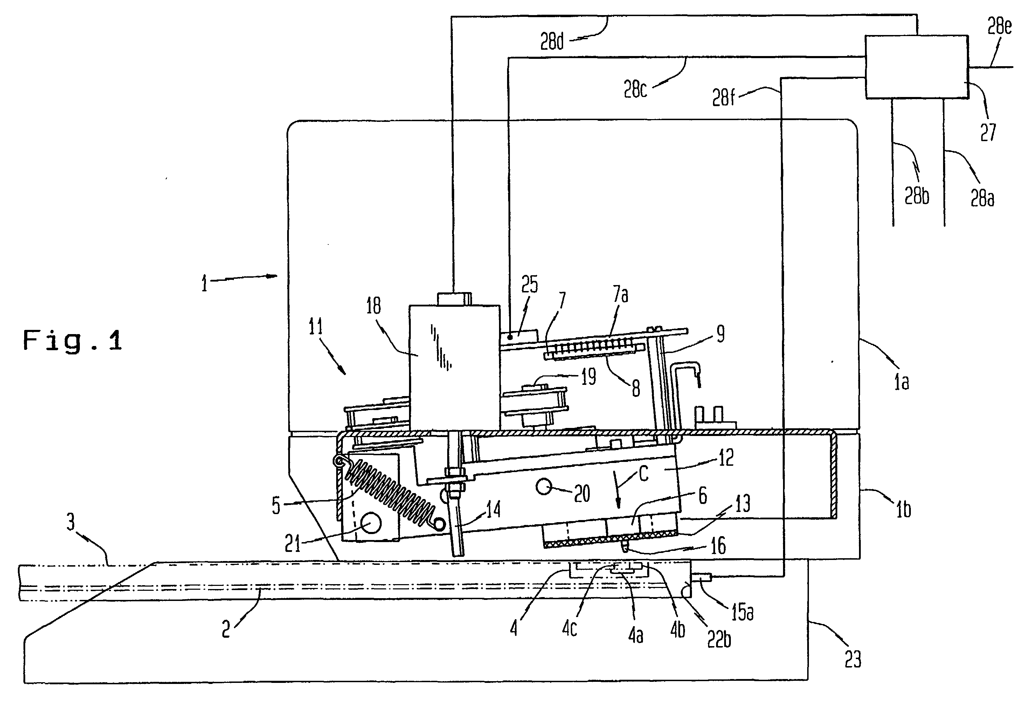

In Fig. 1 ist eine Datenkamera 1 mit einem Gehäusedeckel 1a, einem Gehäuseunterteil 1b und einem Auflagetisch 23 dargestellt. In die Kamera 1 ist eine Röntgenfilmkassette 3 eingelegt, die auf dem Auflagetisch 23 aufliegt. Durch ein Belichtungsfenster 4 der Röntgenfilmkassette 3 können Daten auf einen in der Röntgenfilmkassette 3 befindlichen Röntgenfilm 2 belichtet werden. Das Belichtungsfenster 4 ist mit einer lichtdichten Schiebeklappe 4b zu öffnen bzw. zu schließen. Am Kameragehäuse 1 sind als Mikroschalter ausgebildete Sensoren 15a, 15b, 15c montiert, die sicherstellen, daß die Röntgenfilmkassette 3 in einer bestimmten Orientierung in der Datenkamera 1 liegt. Dazu sind an den Stirnseiten der Röntgenfilmkassette Nuten vorhanden, in die die Sensoren bei richtiger Orientierung der Kassette 3 eingreifen. Das Belichtungsfenster 4 liegt dann im Bereich der Sensoren 15a, 15b, 15c. Die Sensoren 15a, 15b, 15c geben über eine Leitung 28f Fehlersignale an eine Steuereinrichtung 27, wenn die Röntgenfilmkassette 3 in falscher Zuordnung zu der Datenkamera 1 liegt. Statt der Mikroschalter 15a, 15b, 15c können ersatzweise auch Reflexlichtschranken vorgesehen sein.

Ein in der Datenkamera 1 befindlicher Diodenchip 7, auf dessen Unterseite Leuchtdioden 8 zeilenförmig angeordnet sind, wird von einem Objektiv 6 durch das Belichtungsfenster 4 scharf auf den Röntgenfilm 2 abgebildet. Von einem kameraseitigen Öffnungsmechanismus 11 für das Belichtungsfenster 4 ist in Fig. 1 nur ein Entriegelungsstift 16, ein Riemenantrieb 19, eine Führungsstange 20 und ein Hubmagnet 18 dargestellt. Der Diodenchip 7 ist auf einer Leiterplatte 7a angeordnet, auf der sich noch weitere elektronische Bauteile 25 mit einem Mikroprozessor befinden. Alle elektrischen Einheiten sind untereinander über Leitungen 28a; 28b, 28c, 28d mit der Steuereinrichtung 27 verbunden, die über eine Leitung 28e wiederum an einen Computer anschließbar ist. Der Computer liefert die Ausgabedaten. Die Leiterplatte 7a ist über Stehbolzen 9 mechanisch fest verbunden mit dem Öffnungsmechanismus 11. Dieser ist über den Riemenantrieb 19 von einem nicht näher gezeigten Motor bewegbar. Die Trägerplatte 12 des Öffnungsmechanismus 11 ist mit einer Feder 5 an einer kamerafesten Achse 21 schwenkbar gelagert und mit einem Hubmagnet 18 entgegen der Federkraft in Richtung C absenkbar. Wenn keine Röntgenfilmkassette 3 in die Datenkamera 1 eingeführt ist, befindet sich die Trägerplatte 12 in der in Fig. 1 dargestellten, angehobenen Stellung, Nach korrektem Einführen einer Kassette 3 in die Kamera 1 wird von dem Hubmagneten 18 die Trägerplatte 12 in eine Stellung abgesenkt, in der das Belichtungsfenster 4 durch die Lichtabdichtung 13 rundum lichtdicht abgeschlossen ist.

Ein Anschlag 14 begrenzt die Absenkbewegung der Trägerplatte 12 auf die Oberseite der Röntgenfilmkassette 2, so daß eine feste Zuoronung der Schärfeebene des Objektivs 6 zu der Filmebene des Röntgenfilms 2 sichergestellt ist. Der Anschlag 14 ist in seiner Höhe einstellbar und damit an verschiedenen Filmlagen anpaßbar.

Der Entriegelungsstift 16 greift nach dem Absenken der Trägerplatte 12 in eine Entriegelungsöffnung 4c der Schiebeklappe 4b ein und drückt auf eine Entriegelungswippe 4a. Dadurch läßt sich die Schlebeklappe 4b senkrecht zur Zeichenebene verschieben und das Belichtungsfenster 4 öffnen.

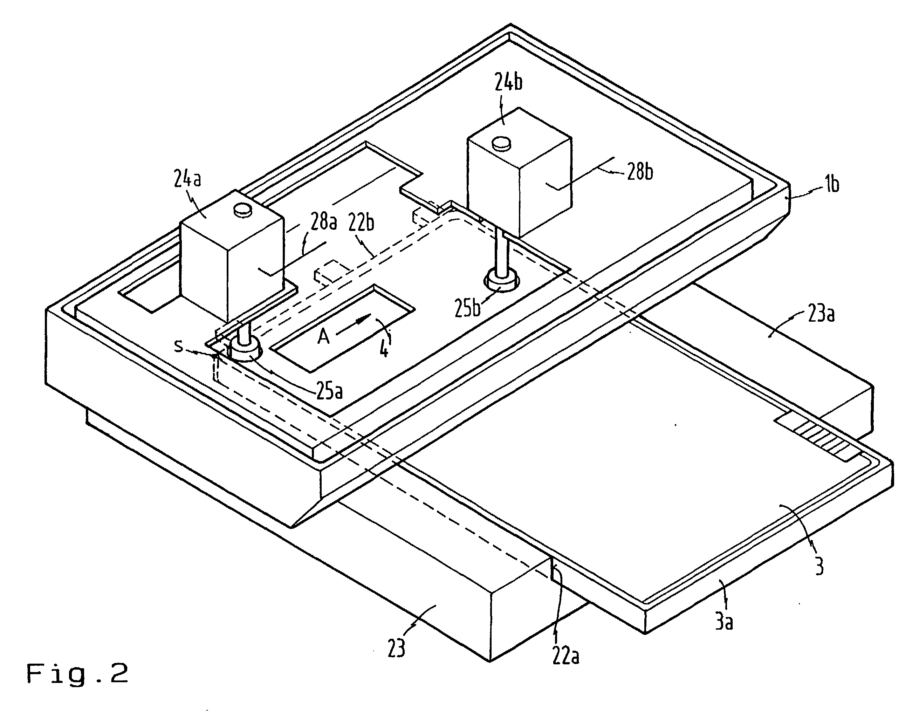

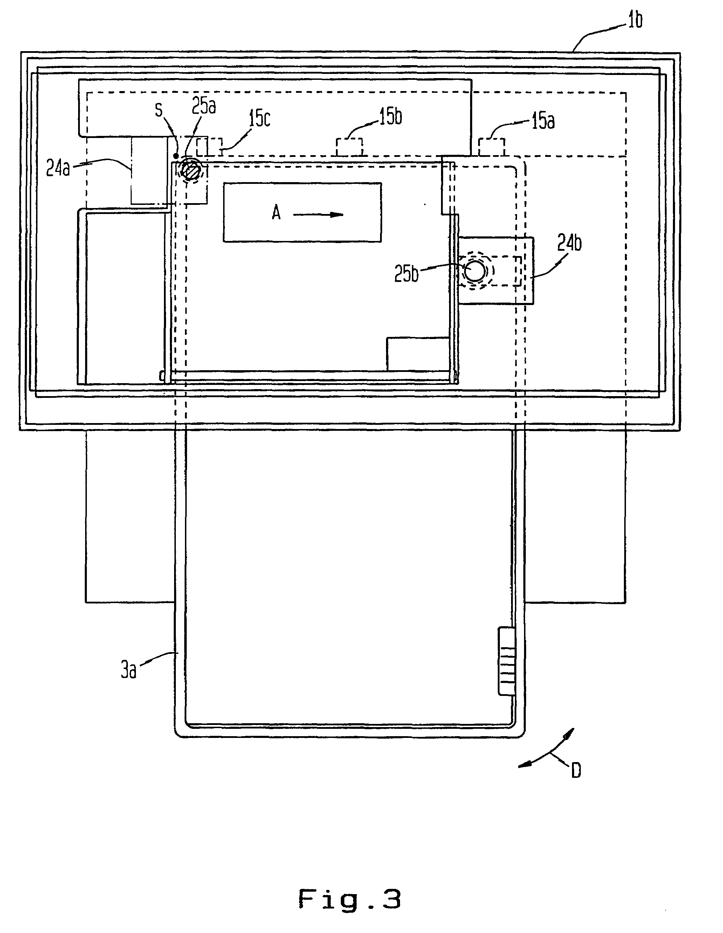

Nach dem Öffnen des Belichtungsfensters 4 beginnt der Belichtungsvorgang. Hierzu wird der Diodenchip 7 zusammen mit der Öffnungsvorrichtung 11 senkrecht zur Zeichenebene der Fig. 1 über das Belichtungsfenster 4 in einer Zeilenrichtung A (vgl. Fig. 2 und 3) bewegt. Die Daten werden dabei punktweise auf den Film 2 belichtet, wobei jedes Datenzeichen aus vielen Punkten aufgebaut ist. Die Leuchtdioden 8 werden hierzu impulsförmig in einem Multiplex-Verfahren angesteuert. Jeder Datenpunkt besteht dann auf dem Röntgenfilm 2 aus mehreren, sich überlappenden Einzelbelichtungen. Das Belichten dauert etwa eine Sekunde.

In Fig. 2 ist die Datenkamera 1 bei geöffnetem Gehäusedeckel 1a und abgenommenem Öffnungsmechanismus 11 dargestellt. Das Unterteil der Kamera besteht aus einem Auflagetisch 23, auf dem die Röntgenkassette 3 auflegbar ist.

Der Auflagetisch 23 hat zwei senkrecht aneinander stoßende Anschläge 22a bzw. 22b, an die die Röntgenkassette 3 anlegbar ist. Im Bereich des Schnittpunkts s der beiden Anschläge 22a, 22b liegt ein Hubmagnet 24a, mit dem ein Klemmbolzen 25a nach oben bzw. unten bewegbar ist. Der Klemmbolzen 25a besteht aus einer harten Metallhülse, in die ein Gummi einvulkanisiert ist. Die Hülse ist an ihrer Unterseite offen, so daß der Gummi nach außen über den Hülsenrand ragt. Der Gummi hat einen hohen Reibungskoeffizienten, so daß er im abgesenkten Zustand eine eingelegte Röntgenfilmkassette 3 klemmt. Der Klemmbolzen 25a ist aber gleichzeitig sehr stabil gegen Scherkräfte, weil der Gummi sicher in der Metallhülse gehalten wird. Dadurch wird die Röntgenkassette 3 zuverlässig geklemmt.

In Fig. 3 ist die Wirkungsweise des Klemmbolzens 25a nochmals deutlicher gezeigt. Der Klemmbolzen 25a ist derart im Bereich des Schnittpunkts s der Anschläge angeordnet, daß er die Kassette 3 sicher auf ihrem äußeren umlaufenden Rand 3a klemmt. Dies ist besonders deshalb vorteilhaft, weit Röntgenkassetten eine genormte Randhöhe haben. Um eine Drehbewegung der Kassette 3 um den Klemmpunkt entlang dem Kreisbogen D zu verhindern, ist zusätzlich zum ersten ein zweiter Hubmagnet 24b vorgesehen, der möglichst weit entfernt vom ersten Hubmagneten 24a liegt. Die Entfernung beträgt ca. 15 cm, so daß eine Klemmung noch bei dem kleinsten in der Praxis vorkommenden Format von Röntgenkassetten (13 x 18 cm) an beiden Klemmstellen erfolgt. Für den Fall, daß noch kleinere Formate vorkommen, ist vorgesehen, von den beiden Hubmagneten 24a und 24b nur einen anzusteuern.

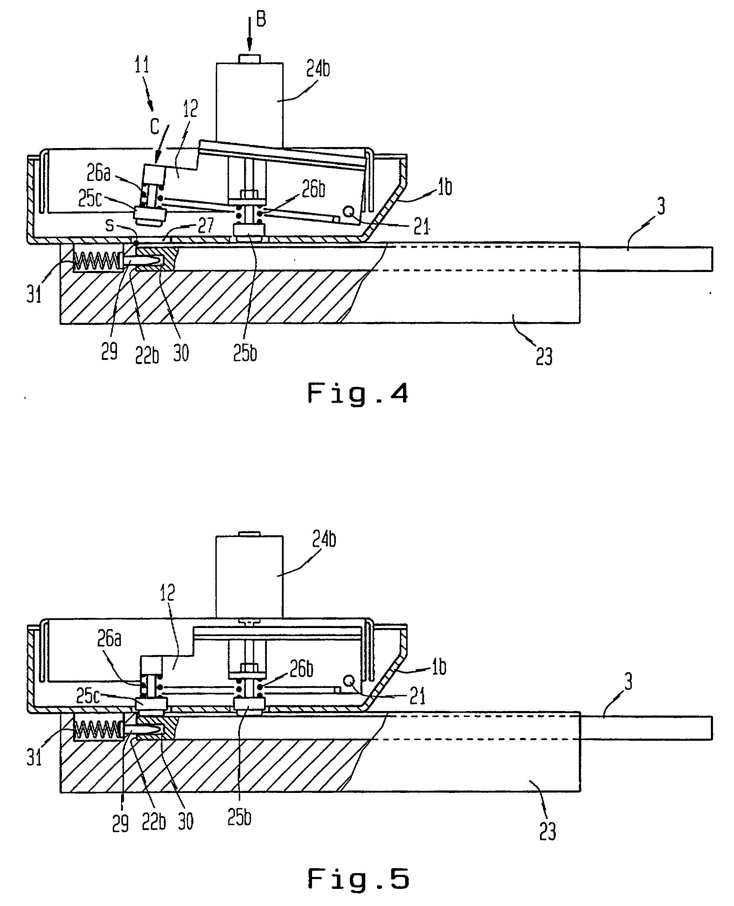

In Fig. 4 ist eine Datenkamera gezeigt, die gegenüber den vorher beschriebenen Figuren etwas abgewandelt ist. Hier wurde auf den Hubmagneten 24a verzichtet. Die Klemmung im Bereich s des Schnittpunkts der beiden Anschläge 22a, 22b wird hier durch einen Klemmbolzen 25c erreicht, der mittels einer Druckfeder 26a direkt an der Grundplatte 12 des Öffnungsmechanismus 11 befestigt ist. Der Andruck im Bereich des Schnittpunkts s wird hier durch den Hubmagneten 18 in Verbindung mit der Druckfeder 26a und dem Klemmbolzen 25c erreicht. Zum Ausgleich unterschiedlicher Kassettenhöhen liegt bei diesem Ausführungsbeispiel außerdem zwischen dem Klemmbolzen 25b und dem Hubmagnet 24b eine Druckfeder 26b. In dem unteren Gehäuse 1b ist eine Führung 27 eingelassen, durch die der vordere Klemmbolzen 25c beim Absenken der Öffnungseinrichtung 11 in Richtung C geführt wird. Der zweite Klemmbolzen 25b ist in Richtung B vom Hubmagneten 24b absenkbar.

Außerdem ist in der Kamera 1 dieses Ausführungsbeispiels ein Dorn 29 vorgesehen, der in eine Ausnehmung 30 am seitlichen Rand 3a der Kassette 3 formschlüssig hineinragt. Der Dorn ist konisch geformt, so daß er beim Einführen der Kassette 3 in die Kamera 1 leicht in die Ausnehmung 30 eingreift. Er verhindert, daß die Kassette während dem Belichten in bzw. quer zur Belichtungsrichtung A veschoben wird. Um bei einer Fehlbedienung die Kassette 3 nicht mit dem Dorn 29 zu beschädigen, ist der Dorn 29 mit einer Feder 31 elastisch gelagert. Er kann soweit in die Kamera 1 zurückgedrückt werden, daß er plan mit dem hinteren Anschlag 22b abschließt. Der Bediener kann bei dieser Ausführungsform leicht feststellen, ob die Kassette 3 korrekt in die Kamera 1 eingeführt ist. Dazu muß er nur versuchen, die Kassette 3 in der Ebene des Auflagetisches 23 bzw. des Films 2 zu drehen. Ist dies nicht möglich, so ist der Dorn 29 korrekt in die Ausnehmung 30 der Kassette eingeführt. Dann ist die Kassette 3 korrekt fixiert und auch das Belichtungsfenster 4 richtig in der Kamera 1 orientiert.

In Fig. 5 ist die Kamera in dem Zustand, in dem die Belichtung stattfindet, dargestellt. Die Grundplatte 12 ist abgesenkt, die Klemmbolzen 25b und 25c klemmen die Kassette 3. Nach dem Belichten wird die Grundplatte 12 wieder angehoben, ebenso der Klemmbolzen 25b vom Hubmagneten 24b. Die Kassette 3 wird dadurch freigegeben und kann aus der Kamera 1 wieder entnommen werden.

Die Erfindung ist nicht auf die o. g. Ausführungsbeispiele beschränkt. Es ist eine Vielzahl von ähnlichen Ausführungsformen möglich, die von der Erfindung Gebrauch machen. Beispielsweise kann die Belichtung statt durch LED auch durch eine Laserdiode erfolgen, deren Licht über einen Schwingspiegel oder Polygonspiegel o. ä. über das Kassettenfenster geführt wird. Genausogut ist es denkbar, zum sicheren Halten der Röntgenkassette statt des Dorns bzw. der Klemmmittel andere Mittel vorzusehen, die formschlüssig in die Kassette eingreifen und diese festhalten. Zur Unterstützung der Klemmwirkung ist der Auflagetisch in dem Bereich, in dem die Röntgenkassette aufliegt, mit einer gummiartigen Anti-Gleitschicht belegbar.

## Patentansprüche

1. Datenkamera (1) zum Belichten von Daten auf einen in einer lichtdicht verschließbaren Röntgenfilmkassette (3) befindlichen Röntgenfilm (2), wobei die Datenkamera (1) folgendes aufweist:
- ein Belichtungsmittel (7, 8) zum Erzeugen von Licht für das Belichten des Röntgenfilms (2),
- ein Öffnungsmittel (11) zum Öffnen eines in der Röntgenfilmkassette (3) vorhandenen Fensters (4) vor dem Belichten des Röntgenfilms (2) und zum Schließen des Fensters (4),
- Haltemittel (24a, 24b, 25a, 25b, 29) zum lösbaren Befestigen der Röntgenfilmkassette (3) relativ zu einem Gehäuse (1a) der Datenkamera (1), wobei die Haltemittel (24a, 24b, 25a, 25b, 29) ein Klemmittel (25a, 25b) zum Klemmen der Röntgenkassette (3) umfassen,
- eine Steuereinrichtung (27), die die Haltemittel (24a, 24b, 25a, 25b, 29) zum Belichten des Röntgenfilms (2) aktiviert und die mit Sensoren (15a, 15b, 15c) zusammenwirkt, die in Abhängigkeit von der Orientierung der Röntgenfilmkassette (3) in der Datenkamera (1) Signale abgeben, und
- wenigstens zwei Anschläge (22a, 22b), an die die Röntgenkassette (3) zum Positionieren ihrer Lage in der Datenkamera (1) anlegbar ist,
**dadurch gekennzeichnet, daß**
- die Positionen der wenigstens zwei Anschläge (22a, 22b) in der Datenkamera (1) fest sind,
- das Klemmittel (25a, 25b) unabhängig von den festen Positionen der wenigstens zwei Anschläge (22a, 22b) betätigbar ist,
- das Belichtungsmittel eine Vielzahl von zeilenförmig angeordneten Lichtquellen zum Belichten des Röntgenfilms mit den Daten durch Emission von zeitlich und örtlich moduliertem Licht aufweist,
- die Datenkamera (1) ein Transportmittel (19) zum Transportieren der Lichtquellen (7, 8) über das Fenster (4) der Röntgenfilmkassette (3) in eine Transportrichtung (A) quer zur Zeilenrichtung der Lichtquellen (7, 8) aufweist und
- das Öffnungsmittel (11) zusammen mit den Lichtquellen (7, 8) zum Belichten des Röntgenfilms (2) in die Transportrichtung (A) bewegbar ist.

2. Datenkamera nach Anspruch 1, dadurch gekennzeichnet, daß die Sensoren (15a, 15b, 15c) Mikroschalter sind, die elektrisch mit der Steuereinrichtung (27) verbunden sind.

3. Datenkamera nach Anspruch 1 oder 2, dadurch gekennzeichnet, daß die Haltemittel ein Formschlußteil (29) umfassen, das formschlüssig in die Kassette (3) eingreift.

4. Datenkamera nach einem der vorhergehenden Ansprüche, gekennzeichnet durch zwei senkrecht zueinander angeordnete Anschläge (22a, 22b), an deren Stoßstelle (s) die Röntgenkassette (3) anlegbar ist.

5. Datenkamera nach Anspruch 1, dadurch gekennzeichnet, daß das Klemmmittel (25a, 25b) einen Reibwert in der Größenordnung von Gummi aufweist.

6. Datenkamera nach einem der Ansprüche 1 bis 5, dadurch gekennzeichnet, daß die Haltemittel (25b, 25c) eine Feder (26a, 26b) aufweisen, die die Röntgenkassette (3) mit einer Federkraft beaufschlagen.

7. Datenkamera nach einem der Ansprüche 1 bis 6, dadurch gekennzeichnet, daß mehrere Haltemittel an verschiedenen Stellen der Datenkamera (1) auf die Röntgenkassette (3) einwirken.

8. Datenkamera nach einem der Ansprüche 1 bis 7, dadurch gekennzeichnet, daß die Haltemittel eine Trägerplatte (12) umfassen sowie einen mit der Steuereinrichtung (27) verbundenen Hubmagneten (18), der die Trägerplatte (12) über eine Lagerungsachse (21) anhebt bzw. absenkt, und daß mit der Trägerplatte (12) Druckelemente (24a) fest verbunden sind, die im abgesenkten Zustand der Trägerplatte (12) auf die in die Datenkamera (1) eingelegte Röntgenkassette (3) drücken.

9. Datenkamera nach Anspruch 7, dadurch gekennzeichnet, daß ein Haltemittel (24a, 25a) im Bereich von einem der Anschläge (22a, 22b) angeordnet ist, so daß es eine mit einer Stirnseite an dem Anschlag anliegende Röntgenkassette (3) an der Stirnseite klemmt.

## Claims

1. Data camera (1) for exposing data onto an X-ray film (2) located in a light-tightly closable X-ray film cassette (3), wherein the data camera (1) comprises the following:
- an exposure means (7, 8) for producing light to expose the X-ray film (2),
- an opening means (11) for opening a window (4) present in the X-ray film cassette (3) before exposure of the X-ray film (2) and to close the window (4),
- retaining means (24a, 24b, 25a, 25b, 29) for the detachable fastening of the X-ray film cassette (3) relative to a housing (1a) of the data camera (1), wherein the retaining means (24a, 24b, 25a, 25b, 29) comprise a clamping means (25a, 25b) for clamping the X-ray cassette (3),
- a control apparatus (27), which activates the retaining means (24a, 24b, 25a, 25b, 29) for exposing the X-ray film (2) and interacts with sensors (15a, 15b, 15c), which emit signals as a function of the orientation of the X-ray film cassette (3) in the data camera (1) and
- at least two limit stops (22a, 22b) against which the X-ray cassette (3) may be placed in order to fix its position in the data camera (1),
**characterised in that**
- the positions of the at least two limit stops (22a, 22b) in the data camera (1) are fixed,
- the clamping means (25a, 25b) may be actuated independently of the fixed positions of the at least two limit stops (22a, 22b),
- the exposure means comprises a plurality of light sources arranged in lines to expose the X-ray film with data by emission of temporally and spatially modulated light,
- the data camera (1) comprises a conveying means (19) for conveying the light sources (7, 8) over the window (4) of the X-ray film cassette (3) in a conveying direction (A) crosswise to the line direction of the light sources (7, 8) and
- the opening means (11) is movable together with the light sources (7, 8) for exposing the X-ray film (2) in the conveying direction (A).

2. Data camera according to claim 1, characterised in that the sensors (15a, 15b, 15c) are microswitches which are electrically connected to the control apparatus (27).

3. Data camera according to claim 1 or 2, characterised in that the retaining means comprises a form-fit component (29), which engages form-fittingly into the cassette (3).

4. Data camera according to one of the preceding claims, characterised by two limit stops (22a, 22b) arranged perpendicularly to one another, against the stopping point (s) of which the X-ray cassette (3) may be placed.

5. Data camera according to claim 1, characterised in that the clamping means (25a, 25b) exhibits a coefficient of friction of the order of magnitude of rubber.

6. Data camera according to one of claims 1 to 5, characterised in that the retaining means (25b, 25c) comprise a spring (26a, 26b), which applies a spring force to the X-ray cassette (3).

7. Data camera according to one of claims 1 to 6, characterised in that two or more retaining means act upon the X-ray cassette (3) at various points on the data camera (1).

8. Data camera according to one of claims 1 to 7, characterised in that the retaining means comprise a support plate (12), together with a lifting magnet (18) connected to the control apparatus (27), which magnet raises or lowers the support plate (12) around a bearing axis (21), and that pressure elements (24a) are firmly connected to the support plate (12), which elements, in the lowered state of the support plate (12), exert pressure upon the X-ray cassette (3) inserted into the data camera (1).

9. Data camera according to claim 7, characterised in that a retaining means (24a, 25a) is arranged in the vicinity of one of the limit stops (22a, 22b), such that it clamps an X-ray cassette (3) lying with an end face against the limit stop at the end face.

## Revendications

1. Caméra de données (1) pour l'irradiation de données sur un film Röntgen (2) se trouvant dans une cassette radiographique (3) pouvant être fermée de façon étanche à la lumière, la caméra de données (1) comportant ce qui suit :
- un moyen d'irradiation (7, 8) pour produire de la lumière pour l'irradiation du film Röntgen (2),
- un moyen d'ouverture (11) pour ouvrir une fenêtre (4), présente dans la cassette radiographique (3), avant l'irradiation du film Röntgen (2) et pour fermer la fenêtre (4),
- des moyens de fixation (24a, 24b, 25a, 25b, 29) pour fixer de façon amovible la cassette de film Röntgen (3) par rapport à un boîtier (1a) de la caméra de données (1), les moyens de fixation (24a, 24b, 25a, 25b, 29) comprenant un moyen de serrage (25a, 25b) pour serrer la cassette radiographique (3),
- un dispositif de commande (27) qui active les moyens de fixation (24a, 24b, 25a, 25b, 29) pour irradier le film Röntgen (2) et qui coopère avec des capteurs (15a, 15b, 15c) qui délivrent des signaux en fonction de l'orientation de la cassette radiographique (3) dans la caméra de
• données (1), et
- au moins deux butées (22a, 22b) contre lesquelles la cassette radiographique (3) peut être appliquée pour régler sa position dans la caméra de données (1),
caractérisée en ce que
- les positions des - au moins - deux butées (22a, 22b) dans la caméra de données (1) sont fixes,
- le moyen de serrage (25a, 25b) peut être actionné indépendamment des positions fixes des - au moins - deux butées (22a, 22b),
- le moyen d'irradiation comporte plusieurs sources lumineuses agencées en forme de lignes pour irradier le film Röntgen avec les données grâce à l'émission d'une lumière modulée dans le temps et dans l'espace,
- la caméra de données (1) comporte un moyen de transport (19) pour transporter les sources lumineuses (7, 8) au-dessus de la fenêtre (4) de la cassette radiographique (3) dans une direction de transport (A) transversalement à la direction de la ligne des sources lumineuses (7, 8) et
- le moyen d'ouverture (11) est déplaçable dans la direction de transport (A) conjointement aux sources lumineuses (7, 8) pour irradier le film Röntgen (2).

2. Caméra de données selon la revendication 1,
caractérisée en ce que les capteurs (15a, 15b, 15c) sont des commutateurs miniatures qui sont reliés de façon électrique au dispositif de commande (27).

3. Caméra de données selon la revendication 1 ou 2,
caractérisée en ce que les moyens de fixation comprennent une partie à fermeture géométrique (29) qui pénètre mécaniquement et géométriquement dans la cassette (3).

4. Caméra de données selon l'une des revendications précédentes, caractérisée par deux butées (22a, 22b) agencées perpendiculairement l'une à l'autre et au point de jointure (s) desquelles la cassette radiographique (3) peut être appliquée.

5. Caméra de données selon la revendication 1,
caractérisée en ce que le moyen de serrage (25a, 25b) a un coefficient de frottement de l'ordre de celui du caoutchouc.

6. Caméra de données selon l'une des revendications 1 à 5, caractérisée en ce que les moyens de fixation (25b, 25c) comportent un ressort (26a, 26b) qui soumet la cassette radiographique (3) à une force élastique.

7. Caméra de données selon l'une des revendications 1 à 6, caractérisée en ce que plusieurs moyens de fixation agissent sur la cassette radiographique (3) en différents endroits de la caméra de données (1).

8. Caméra de données selon l'une des revendications 1 à 7, caractérisée en ce que les moyens de fixation comprennent une plaque porteuse (12) ainsi qu'un électroaimant de levage (18) relié au dispositif de commande (27) qui lève ou baisse la plaque porteuse (12) par l'intermédiaire d'un axe de logement (21) et en ce que des éléments de pression (24a) sont reliés fixement à la plaque porteuse (12) et poussent sur la cassette radiographique (3) placée dans la caméra de données (1) lorsque la plaque porteuse (12) est à son niveau abaissé.

9. Caméra de données selon la revendication 7,
caractérisée en ce qu'un moyen de fixation (24a, 25a) est agencé dans la zone de l'une des butées (22a, 22b) de telle sorte qu'il serre contre le côté frontal une cassette radiographique (3) appliquée avec un côté frontal contre la butée.
